# EUROPÄISCHE PATENTSCHRIFT

(11) **EP 1 435 025 B1**
(45) Veröffentlichungstag und Bekanntmachung des Hinweises auf die Patenterteilung: **12.04.2006**
(21) Anmeldenummer: 02776718.5
(22) Anmeldetag: 25.09.2002
(51) Int. Cl.: G05B 19/042, G05B 19/418

(54) **SYSTEM UND VERFAHREN ZUM ZUGRIFF AUF EIN GERÄT, INSBESONDERE EIN AUTOMATISIERUNGSGERÄT MIT EINER STANDARDISIERTEN SCHNITTSTELLE**
SYSTEM AND METHOD FOR ACCESSING AN APPLIANCE, ESPECIALLY AN AUTOMATION APPLIANCE COMPRISING A STANDARDISED INTERFACE
SYSTEME ET PROCEDE POUR ACCEDER A UN APPAREIL, EN PARTICULIER A UN APPAREIL D'AUTOMATISATION POURVU D'UNE INTERFACE NORMALISEE

(30) Priorität: 08.10.2001 DE 10149480
(43) Veröffentlichungstag der Anmeldung: 07.07.2004
(73) Patentinhaber: SIEMENS AKTIENGESELLSCHAFT, 80333 München (DE)
(72) Erfinder: LANGE, Ronald, 90766 Fürth (DE); SPRINGER, Frank, 91224 Hohenstadt (DE)
(86) Internationale Anmeldenummer: PCT/DE2002/003617
(87) Internationale Veröffentlichungsnummer: WO 2003/034161

(56) Entgegenhaltungen:
- WO-A-00/76169
- WO-A-01/22681
- WO-A-01/57651
- WO-A-98/53581
- US-A1- 2001 047 383

## Beschreibung

Die Erfindung betrifft ein System und Verfahren zum Zugriff auf ein Gerät, insbesondere ein Automatisierungsgerät mit einer standardisierten Schnittstelle.

Ein derartiges System und Verfahren kommt beispielsweise im Bereich der Automatisierungstechnik, bei Produktions- und Werkzeugmaschinen etc. zum Einsatz. In der Automatisierungstechnik haben sich einheitliche Schnittstellen für den Zugriff auf die Geräte durchgesetzt. Beispiele dafür sind OPC und PROFInet. Die Ausprägungen dieser Schnittstellen sind dabei immer an eine gewisse Kommunikationstechnologie gebunden, in den beiden genannten Fällen ist dies COM/DCOM. Die Anforderung ist jedoch, diese Schnittstellen auch über neue Kommunikationstechnologien wie z.B. Webzugriff ansprechen zu können.

Aus der WO 00/76169 A2 ist ein Verfahren und ein System zum Zugriff auf Elemente eines Netzwerkes über Internet bekannt. Ein Internet-Gerät kommuniziert dabei mit einem Nicht-Internet-Gerät in der Weise, dass eine Verbindung über das Internet zu einem sogenannten Contoll-Master aufgebaut wird, der einen Aufruf empfängt. In dem Aufruf ist eine IP-Adresse des zu kontaktierenden Geräts enthalten. Diese Adresse wird mit einem Port verglichen, welches die Verbindungsadresse zu dem zu verbindenden Gerät enthält. Dies geschieht mittels eines sogenannten Verbindungsobjekts.

Der Erfindung liegt die Aufgabe zugrunde, ein System und ein Verfahren zum Zugriff auf ein Gerät anzugeben, das keine Veränderung des Geräts selbst und auch keine Zusatzprojektierung einer mit dem Gerät verbundenen Datenverarbeitungsvorrichtung erfordert.

Diese Aufgabe wird durch ein Verfahren bzw. durch ein System mit den in den Ansprüchen 1 bzw. 8 angegebenen Merkmalen gelöst.

Der Erfindung liegt die Erkenntnis zugrunde, dass bei bisherigen Lösungen eine Ergänzung der Geräte um ein neues Kommunikationsprotokoll erforderlich war, beispielsweise der Einsatz von Wrappern (d.h. Kommunikationsumsetzer) auf Client-oder Geräteseite, der Einsatz von zusätzlichen Servern (Geräten), d.h. der Wrapper wird auf ein eigenes Gerät ausgelagert. Dabei ist aber typischerweise eine Projektierung dieses Servers nötig (z.B. welche unterlagerten Geräte gibt es). Bei einer Anlagenerweiterung/-änderung muss also auch die Projektierung des Servers angepasst werden. Die Gründe für die Notwendigkeit der Projektierung sind dabei: Kein einheitliches Zugriffsinterface zu den Geräten. Damit muss bei jedem Gerät neu das Zugriffsinterface (Kommunikationsprotokoll, Methodensignatur, ...) beim Server projektiert werden bzw. sogar entsprechende Treibersoftware geladen werden. Für den Zugriff auf die Geräte muss der Server deren Netzwerk-Adresse kennen. Diese muss somit projektiert werden bzw. bei einer Änderung entsprechend nachgezogen werden.

Bei dem erfindungsgemäßen Verfahren hingegen erfolgt der Zugriff auf das Gerät über eine standardisierte Schnittstelle des völlig unveränderten Geräts. Möglich wird dies durch das Senden eines Aufrufs von der ersten Datenverarbeitungsvorrichtung aus über ein Datennetz, z.B. Internet an die zweite Datenverarbeitungsvorrichtung, wobei in dem Aufruf Zusatzdaten in Form einer Adresse des betreffenden Geräts enthalten sind. In der zweiten Datenverarbeitungsvorrichtung werden diese Zusatzdaten aus den Daten des Aufrufs extrahiert und es erfolgt über die so extrahierte Adresse über die standardisierte Schnittstelle des Geräts. Die nötige Zusatzinformation wird dabei nicht als Projektierung des Servers, sondern als Teil der Adresse des Servers mitgegeben. Zur Adressierung werden URLs (Uniform Resource Locator) verwendet. So kann der Server z.B. eine HTML Seite von einem PROFInet Gerät erzeugen, dessen Adresse es erst bei der Anfrage erhält. Eine "Seite" wird also z.B. über http://hostx:5001/MiniCBA/hosty abgefragt, wobei "hostx" der DNS Name der zweiten Datenverarbeitungsvorrichtung ind Form eines Proxyservers und "hosty" der DNS Name des Geräts ist.

Die Besonderheit der Erfindung liegt in der Verwendung eines Servers, der nicht projektiert werden muss, da die nötige Zusatzinformation in der Adressierung enthalten ist. Dieses Verfahren nutzt die Tatsache, dass die Adressierung und das Zugriffsinterface auf OPC Server oder PROFInet Geräte einheitlich ist. Somit kann ein neues Kommunikationsprotokoll (also z.B. der Zugriff über Browser per HTTP und HTML Seite) ergänzt werden, ohne das die Geräte dazu erweitert werden müssen oder der o.g Server projektiert werden muss.

Somit ergibt sich insbesondere auf dem Gebiet der Automatisierungstechnik, d.h. vor allem der Fertigungs- und Prozessautomatisierung die Möglichkeit eines Online-Service- und - Supports sowie eines HMI-Interfaces zum Bedienen- und Beobachten auch Remote, d.h. von einer entfernten Datenverarbeitungsvorrichtung aus, die selbst keine direkte Kommunikationsmöglichkeit mit dem Gerät besitzt.

Ein vorteilhafter Anwendungsfall der Erfindung besteht darin, dass das Gerät ein Automatisierungsgerät, insbesondere ein Profinet-Gerät ist.

Die Erfindung ist wegen der einheitlichen Interfaces von OPC-Servern und beispielsweise Profinet-Geräten besonders vorteilhaft in den Fällen einsetzbar, in denen die standardisierte Schnittstelle des Geräts eine COM- und/oder DCOM-Schnittstelle ist.

Eine Datenausgabe am Ort der Abfrage wird dadurch ermöglicht, dass nach dem Zugreifen auf Informationen des Geräts die Informationen vom Gerät zur zweiten Datenverarbeitungsvorrichtung und von dort über das Datennetz an die erste Datenverarbeitungsvorrichtung übertragen werden.

Ein aufgrund der Verbreitung der Datennetze besonders vorteilhafter Anwendungsfall besteht darin, dass als Datennetz Internet und/oder Intranet und als Kommunikationsprotokoll HTTP vorgesehen ist. Vorteilhafter Weise ist dabei zur Übertragung der vom Gerät abzufragenden Informationen, Antwortdaten HTML und/oder XML vorgesehen.

Eine gezieltere Steuerung des Geräts kann dadurch erreicht werden, dass der Aufruf für das Gerät und/oder die zweite Datenverarbeitungsvorrichtung bestimmte Zusatzparameter enthält, die zur Steuerung des Inhalts und/oder des Formats der Ausgabe der vom Gerät abzufragenden Informationen vorgesehen sind. So kann man über weitere Parameter den Inhalt der Ausgabe und das Format steuern. So kann beispielsweise über http://hostx:5001/MiniCBA?Address=hosty&Hierarchy=3&IsXML=1 angegeben werden, dass man erst die dritte Hierarchiestufe der PROFInet Objekte sehen möchte und dass das Ausgabeformat XML sein soll.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zum Zugriff auf ein Automatisierungsgerät über dessen standardisierte Schnittstelle und
- FIG 2: eine schematische Darstellung beispielhafter Aufrufsdaten mit zu extrahierenden Adressdaten.

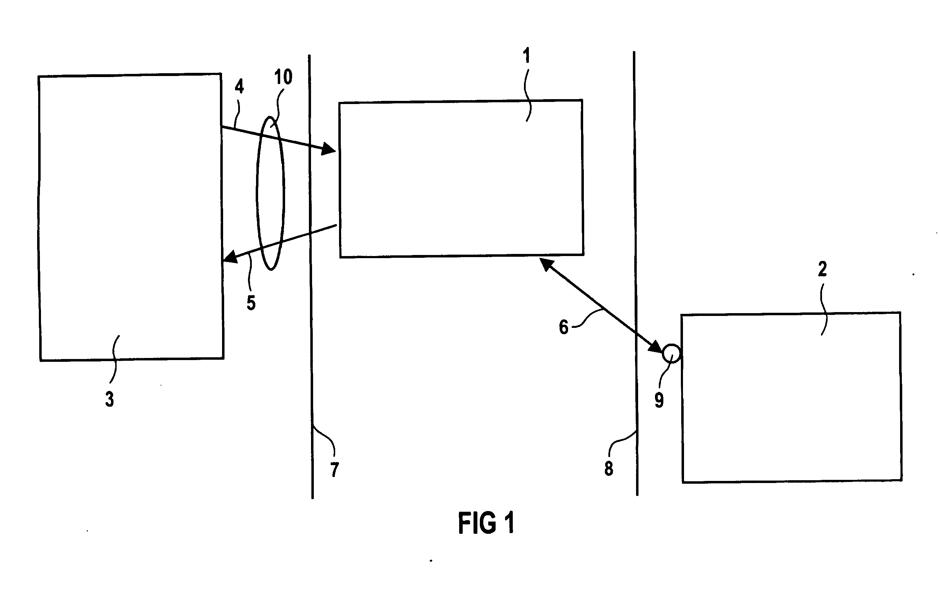

FIG 1 zeigt ein Blockschaltbild eines Ausführungsbeispiels eines Systems zum Zugriff auf ein Automatisierungsgerät 2 über dessen standardisierte Schnittstelle 9 von einer ersten Datenverarbeitungsvorrichtung 3 aus. Das in FIG 1 dargestellte System besteht im wesentlichen aus einer ersten Datenverarbeitungsvorrichtung 3, aus einer zweiten Datenverarbeitungsvorrichtung 1 sowie aus einem Gerät 2, insbesondere einem Automatisierungsgerät für ein Datennetz 10, beispielsweise über Internet erfolgt. Von der ersten Datenverarbeitungsvorrichtung 3 erfolgt ein Aufruf 4 an die zweiten Datenverarbeitungsvorrichtung 1. Mit einer Trennlinie 7 ist eine mögliche Rechnergrenze zwischen der ersten Datenverarbeitungsvorrichung 3 und der zweiten Datenverarbeitungsvorrichtung 1 gekennzeichnet. In dem Aufruf 4, der an die zweiten Datenverarbeitungsvorrichtung 1 gesendet wird, ist eine Adresse enthalten, die das Gerät 2 kennzeichnet. Die zweite Datenverarbeitungsvorrichtung 1, beispielsweise ein sogenannter Web-Server extrahiert aus den Daten des Aufrufs 4 die Adresse des Geräts 2. Über eine Datenverbindung 6 erfolgt dann von der zweiten Datenverarbeitungsvorrichtung 1 ein Datenzugriff an die so extrahierte Adresse des Geräts 2. Der Zugriff erfolgt dabei über eine standardisierte Schnittstelle 9 des Geräts 2. Mit den Bezugszeichen 8 ist wiederum ein mögliche Rechnergrenze zwischen der zweiten Datenverarbeitungsvorrichtung 1 und dem Gerät 2 gekennzeichnet.

Die Besonderheit des in FIG 1 dargestellten Systems besteht insbesondere darin, dass es mit Hilfe der Adressextraktion in der zweiten Datenverarbeitungsvorrichtung 1 ermöglicht wird, von der ersten Datenverarbeitungsvorrichtung 3 auf Informationsdaten des Geräts 2 zuzugreifen, obwohl ein direkter Zugriff von der ersten Datenverarbeitungsvorrichtung 3 aus nicht möglich ist. Ermöglicht wird dieser indirekte Datenzugriff dadurch, dass die Adresse des Geräts 2 in dem Aufruf 4 enthalten ist und von der zweiten Datenverarbeitungsvorrichtung 1 extrahiert wird. Die Rückübertragung der über die standardisierte Schnittstelle 9 über den Datenkanal 6 abgefragten Informationsdaten erfolgt über einen Rückkanal 5, der beispielsweise wiederum ein Internet-Datennetz 10 benutzt.

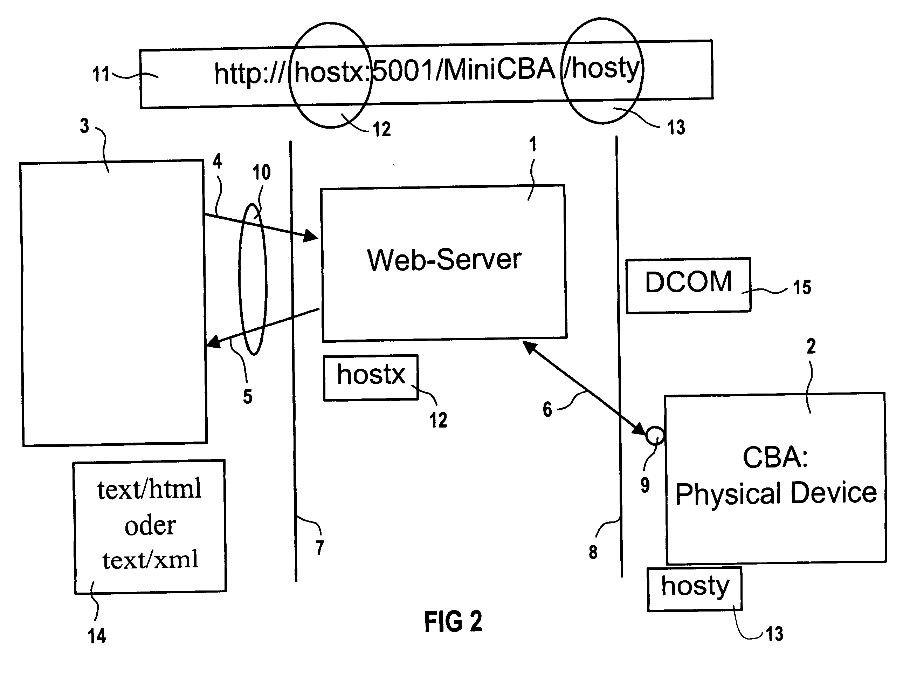

FIG 2 zeigt eine schematische Darstellung beispielhafter Aufrufsdaten 11 mit zu extrahierenden Adressdaten 13 zur Adressierung eines Geräts 2 über dessen standardisierte Schnittstelle. FIG 2 enthält im wesentlichen die bereits im Zusammenhang mit FIG 1 beschriebenen Bestandteile. Darüber hinaus ist in FIG 2 nochmals beispielhaft ein Aufruf 11 dargestellt, der aus einer Internet-Adresse http://hostx:5001/MiniCBA/hosty gebildet wird. Ein erster Bestandteil 12 dieser Adresse, nämlich hostx kennzeichnet dabei die Adresse der zweiten Datenverarbeitungsvorrichtung 1, der als sogenannter Web-Server agiert. Ein weiterer Bestandteil 13 der Adresse 11, nämlich hosty kennzeichnet die Adresse des Geräts 2. Dieser weitere Bestandteil 13 wird in der zweiten Datenverarbeitungsvorrichtung 1 extrahiert, so dass ein Datenzugriff über die standardisierte Schnittstelle 9 des Geräts 2 ermöglicht wird. Die so abgefragten Daten des Geräts 2 werden über die Datenverbindung 6 an die zweite Datenverarbeitungsvorrichtung 1 zurückgesendet und von dort in Antwortdaten 5 an die erste Datenverarbeitungsvorrichtung 3, beispielsweise als Text oder als html-Datei (vgl. Bezugszeichen 14) übertragen. Neben der Einbindung der Adressdaten in den Aufruf 4 bzw. in die Adresse 11 ist es weiter möglich, weitere Parameter einzubringen, die den Inhalt der Ausgabe und/oder das Format steuern. So kann beispielsweise angegeben werden, dass man erst eine bestimmte Hierarchiestufe der Geräte 2 sehen möchte und dass ein bestimmtes Ausgabeformat gewünscht ist.

In Beispiel der Fig. 2 greift ein Client über die Adresse 11 http://hostx:5001/MiniCBA/hosty auf den Server mit der (DNS-) Adresse 12, d.h. hostx zu. Dort wird aus der URL die Adresse 13 eines PROFInet Geräts extrahiert (hosty) und auf dieses über die durch PROFInet festgelegten Interfaces per COM/DCOM (vgl. Bezugszeichen 15) zugegriffen.

Die Striche 7, 8 in FIG 2 zeigen mögliche Rechnergrenzen der Datenverarbeitungsvorrichtungen 3,1, sowie des Geräts 2. Der rechte Strich zeigt dabei nochmals auf, dass das neue Kommunikationsprotokoll (hier HTTP) und die Erzeugung der Antwort (hier HTML oder XML) nicht in die Geräte integriert werden muss.

Der Aufbau der URL ist hier nur beispielhaft. Genauso gut könnte man auch http://hostx:5001/MiniCBA?Address=hosty oder ähnliches verwenden.

Zusammenfassend betrifft die Erfindung somit ein System und ein Verfahren zum Zugriff auf ein Gerät, insbesondere ein Automatisierungsgerät mit einer standardisierten Schnittstelle. Es wird vorgeschlagen, einen Zugriff auf Daten des Geräts von einer Datenverarbeitungsvorrichtung über ein Datennetz dadurch zu erzielen, dass ein Aufruf 4 von einer ersten Datenverarbeitungsvorrichtung 3 aus über ein Datennetz an eine zweite Datenverarbeitungsvorrichtung 1 gesendet wird und dass in der zweiten Datenverarbeitungsvorrichtung eine in den Daten des Aufrufs 4 der ersten Datenverarbeitungsvorrichtung 3 an die zweite Datenverarbeitungsvorrichtung 1 enthaltenen Adresse 10 zur Kennzeichnung des Geräts 2 extrahiert wird, wobei auf Informationen des Geräts 2 über die standardisierte Schnittstelle 9 des Geräts 2 mittels der in der zweiten Datenverarbeitungsvorrichtung 1 extrahierten Adresse zugegriffen wird.

## Patentansprüche

1. Verfahren zum Zugriff auf ein Gerät (2) mit einer standardisierten Schnittstelle (9) mit folgenden Schritten:
• Senden eines Aufrufs (4) von einer ersten Datenverarbeitungsvorrichtung (3) aus über ein Datennetz (10) an eine zweite Datenverarbeitungsvorrichtung (1),
• in der zweiten Datenverarbeitungsvorrichtung (1) Extrahieren einer in den Daten des Aufrufs (4) der ersten Datenverarbeitungsvorrichtung (3) an die zweite Datenverarbeitungsvorrichtung (1) enthaltenen Adresse (13) zur Kennzeichnung des Geräts (2), wobei die in den Daten des Aufrufs (4) enthaltene Adresse (13) zur Kennzeichnung des Geräts (2) als Zusatzinformation in der Adressierung enthalten ist, und
• Zugreifen auf Informationen des Geräts (2) über die standardisierte Schnittstelle (9) des Geräts (2) mittels der in der zweiten Datenverarbeitungsvorrichtung (1) extrahierten Adresse (13).

2. Verfahren nach Anspruch 1,
**dadurch gekennzeichnet,**
**dass** das Gerät (2) ein Automatisierungsgerät, insbesondere ein Profinet-Gerät ist.

3. Verfahren nach einem der Ansprüche 1 oder 2,
**dadurch gekennzeichnet,**
**dass** die standardisierte Schnittstelle (9) des Geräts (2) eine COM- und/oder DCOM-Schnittstelle ist.

4. Verfahren nach einem der Ansprüche 1 bis 3,
**dadurch gekennzeichnet,**
**dass** nach dem Zugreifen auf Informationen des Geräts (2) die Informationen vom Gerät (2) zur zweiten Datenverarbeitungsvorrichtung (19 und von dort über das Datennetz (10) an die erste Datenverarbeitungsvorrichtung (3) übertragen werden.

5. Verfahren nach einem der Ansprüche 1 bis 4,
**dadurch gekennzeichnet,**
**dass** als Datennetz (10) Internet und/oder Intranet und als Kommunikationsprotokoll HTTP vorgesehen ist.

6. Verfahren nach einem der Ansprüche 1 bis 5,
**dadurch gekennzeichnet,**
**dass** zur Übertragung der vom Gerät (2) abzufragenden Informationen, Antwortdaten HTML und/oder XML vorgesehen ist.

7. Verfahren nach einem der Ansprüche 1 bis 6,
**dadurch gekennzeichnet,**
**dass** der Aufruf für das Gerät und/oder die zweite Datenverarbeitungsvorrichtung (1) bestimmte Zusatzparameter enthält, die zur Steuerung des Inhalts und/oder des Formats der Ausgabe der vom Gerät (2) abzufragenden Informationen vorgesehen sind.

8. System zum Zugriff auf ein Gerät (2) mit einer standardisierten Schnittstelle (9) mit
• einer ersten Datenverarbeitungsvorrichtung (3) zum Senden eines Aufrufs (4) über ein Datennetz (10) an eine zweite Datenverarbeitungsvorrichtung (1), mit
• in der zweiten Datenverarbeitungsvorrichtung (1) enthaltenen Extraktionsmitteln Mitteln zum Extrahieren einer in den Daten des Aufrufs (4) der ersten Datenverarbeitungsvorrichtung (3) an die zweite Datenverarbeitungsvorrichtung (1) enthaltenen Adresse (10) zur Kennzeichnung des Geräts (2) wobei die in den Daten des Aufrufs (4) enthaltene Adresse (13) zur Kennzeichnung des Geräts (2) als Zusatzinformation in der Adressierung enthalten ist und mit
• Zugriffsmitteln zum Zugreifen auf Informationen des Geräts (2) über die standardisierte Schnittstelle (9) des Geräts (2) mittels der in der zweiten Datenverarbeitungsvorrichtung (1) extrahierten Adresse.

9. System nach Anspruch 8,
**dadurch gekennzeichnet,**
**dass** das Gerät (2) ein Automatisierungsgerät, insbesondere ein Profinet-Gerät ist.

10. System nach einem der Ansprüche 8 oder 9,
**dadurch gekennzeichnet,**
**dass** die standardisierte Schnittstelle (9) des Geräts (2) eine COM- und/oder DCOM-Schnittstelle ist.

11. System nach einem der Ansprüche 8 bis 10,
**dadurch gekennzeichnet,**
**dass** nach dem Zugreifen auf Informationen des Geräts (2) die Informationen vom Gerät (2) zur zweiten Datenverarbeitungsvorrichtung (19 und von dort über das Datennetz (10) an die erste Datenverarbeitungsvorrichtung (3) übertragen werden.

12. System nach einem der Ansprüche 8 bis 11,
**dadurch gekennzeichnet,**
**dass** als Datennetz (10) Internet und/oder Intranet und als Kommunikationsprotokoll HTTP vorgesehen ist.

13. System nach einem der Ansprüche 8 bis 12,
**dadurch gekennzeichnet,**
**dass** zur Übertragung der vom Gerät (2) abzufragenden Informationen, Antwortdaten HTML und/oder XML vorgesehen ist.

14. System nach einem der Ansprüche 8 bis 13,
**dadurch gekennzeichnet,**
**dass** der Aufruf für das Gerät und/oder die zweite Datenverarbeitungsvorrichtung (1) bestimmte Zusatzparameter enthält, die zur Steuerung des Inhalts und/oder des Formats der Ausgabe der vom Gerät (2) abzufragenden Informationen vorgesehen sind.

15. Computerprogrammprodukt mit Mitteln zur Durchführung eines Verfahrens nach einem der Ansprüche 1 bis 7, wenn das Computerprogramm auf einer Datenverarbeitungsvorrichtung, einem elektronischem Schaltkreis oder einem Automatisierungssystem ausgeführt wird.

## Claims

1. Method for accessing a device (2) with a standardised interface (9), comprising the following steps:
• Send a call (4) from a first data processing device (3) via a data network (10) to a second data processing device (1),
• Extract, in the second data processing device, an address (10) for identifying the device (2), said address being contained in the data of the call (4) from the first data processing device (3) to the second data processing device (1), with the address (13) contained in the data of the call (4) being contained to identify the device (2) as additional information in the addressing,
• Access information of the device (2) via the standardised interface (9) of the device (2) by means of the address (13) extracted in the second data processing device (1).

2. Method according to claim 1, **characterised in that** the device (2) is an automation device, in particular a Profinet device.

3. Method according to one of the claims 1 or 2, **characterised in that**
the standardised interface (9) of the device (2) is a COM and/or DCOM interface.

4. Method according to one of the claims 1 to 3, **characterised in that**
after information of the device (2) has been accessed the information is transmitted by the device (2) to the second data processing device (19) and from there is transmitted to the first data processing device (3) via the data network (10).

5. Method according to one of the claims 1 to 4, **characterised in that**
the internet and/or an intranet is provided as the data network (10) and HTTP is provided as the communication protocol.

6. Method according to one of the claims 1 to 5, **characterised in that**
response data HTML and/or XML is provided for transmission of the information to be retrieved from the device (2).

7. Method according to one of the claims 1 to 6,
**characterised in that**
the call for the device and/or the second data processing device (1) contains certain additional parameters which are provided for controlling the content and/or the format of the output of the information to be retrieved from the device (2).

8. System for accessing a device (2) with a standardised interface (9), comprising
• a first data processing device (3) for sending a call (4) via a data network (10) to a second data processing device (1), having
• extraction means contained in the second data processing device (1) for extracting an address (10) for identifying the device (2), said address being contained in the data of the call (4) from the first data processing device (3) to the second data processing device (1), with the address (13) for identifying the device (2) contained in the data of the call (4) being contained as additional information in the addressing and having
• access means for accessing information of the device (2) via the standardised interface (9) of the device (2) by means of the address extracted in the second data processing device (1) .

9. System according to claim 8, **characterised in that** the device (2) is an automation device, in particular a Profinet device.

10. System according to one of the claims 8 or 9,
**characterised in that**
the standardised interface (9) of the device (2) is a COM and/or DCOM interface.

11. System according to one of the claims 8 to 10,
**characterised in that**
after information of the device (2) has been accessed the information is transmitted by the device (2) to the second data processing device (19) and from there is transmitted to the first data processing device (3) via the data network (10).

12. System according to one of the claims 8 to 11,
**characterised in that**
the internet and/or an intranet is provided as the data network (10) and HTTP is provided as the communication protocol.

13. System according to one of the claims 8 to 12,
**characterised in that**
response data HTML and/or XML is provided for transmission of the information to be retrieved from the device (2).

14. System according to one of the claims 8 to 13,
**characterised in that**
the call for the device and/or the second data processing device (1) contains certain additional parameters which are provided for controlling the content and/or the format of the output of the information to be retrieved from the device (2).

15. Computer program product having means for performing a method according to one of the claims 1 to 7 when the computer program is executed on a data processing device, an electronic circuit or an automation system.

## Revendications

1. Procédé d'accès à un appareil (2) comportant une interface normalisée (9), comprenant les étapes suivantes :
• émission d'un appel (4) d'un premier dispositif de traitement de données (3) à un deuxième dispositif de traitement de données (1) par l'intermédiaire d'un réseau de données (10),
• dans le deuxième dispositif de traitement de données (1), extraction d'une adresse (13) contenue dans les données de l'appel (4) du premier dispositif de traitement de données (3) au deuxième dispositif de traitement de données (1) pour caractériser l'appareil (2), l'adresse (13) contenue dans les données de l'appel (4) pour caractériser l'appareil (2) étant contenue comme information supplémentaire dans l'adressage, et
• accès à des informations de l'appareil (2) par l'intermédiaire de l'interface normalisée (9) de l'appareil (2) au moyen de l'adresse (13) extraite dans le deuxième dispositif de traitement de données (1) .

2. Procédé selon la revendication 1,
**caractérisé par le fait que** l'appareil (2) est un appareil d'automatisation, notamment un appareil Profinet.

3. Procédé selon l'une des revendications 1 ou 2,
**caractérisé par le fait que** l'interface normalisée (9) de l'appareil (2) est une interface COM et/ou DCOM.

4. Procédé selon l'une des revendications 1 à 3,
**caractérisé par le fait que**, après l'accès à des informations de l'appareil (2), on transmet les informations de l'appareil (2) au deuxième dispositif de traitement de données (1) et de là au premier dispositif de traitement de données (3) par l'intermédiaire du réseau de données (10).

5. Procédé selon l'une des revendications 1 à 4,
**caractérisé par le fait qu'**il est prévu comme réseau de données (10) Internet et/ou Intranet et comme protocole de communication HTTP.

6. Procédé selon l'une des revendications 1 à 5,
**caractérisé par le fait qu'**il est prévu pour la transmission des informations à interroger par l'appareil (2) des données de réponse HTML et/ou XML.

7. Procédé selon l'une des revendications 1 à 6,
**caractérisé par le fait que** l'appel pour l'appareil et/ou pour le deuxième dispositif de traitement de données (1) contient certains paramètres supplémentaires qui sont prévus pour la commande du contenu et/ou du format de la sortie des informations à interroger par l'appareil (2).

8. Système d'accès à un appareil (2) comportant une interface normalisée (9), avec :
• un premier dispositif de traitement de données (3) pour l'émission d'un appel (4) à un deuxième dispositif de traitement de données (1) par l'intermédiaire d'un réseau de données (10),
• des moyens d'extraction contenus dans le deuxième dispositif de traitement de données (1) pour l'extraction d'une adresse (10) contenue dans les données de l'appel (4) du premier dispositif de traitement de données (3) au deuxième dispositif de traitement de données (1) pour caractériser l'appareil (2), l'adresse (13) contenue dans les données de l'appel (4) pour caractériser l'appareil (2) étant contenue comme information supplémentaire dans l'adressage, et
• des moyens d'accès pour l'accès à des informations de l'appareil (2) par l'intermédiaire de l'interface normalisée (9) de l'appareil (2) au moyen de l'adresse extraite dans le deuxième dispositif de traitement de données (1).

9. Système selon la revendication 8,
**caractérisé par le fait que** l'appareil (2) est un appareil d'automatisation, notamment un appareil Profinet.

10. Système selon l'une des revendications 8 ou 9,
**caractérisé par le fait que** l'interface normalisée (9) de l'appareil (2) est une interface COM et/ou DCOM.

11. Système selon l'une des revendications 8 à 10,
**caractérisé par le fait que**, après l'accès à des informations de l'appareil (2), les informations de l'appareil (2) sont transmises au deuxième dispositif de traitement de données (1) et de là au premier dispositif de traitement de données (3) par l'intermédiaire du réseau de données (10).

12. Système selon l'une des revendications 8 à 11,
**caractérisé par le fait qu'**il est prévu comme réseau de données (10) Internet et/ou Intranet et comme protocole de communication HTTP.

13. Système selon l'une des revendications 8 à 12,
**caractérisé par le fait qu'**il est prévu pour la transmission des informations à interroger par l'appareil (2) des données de réponse HTML et/ou XML.

14. Système selon l'une des revendications 8 à 13,
**caractérisé par le fait que** l'appel pour l'appareil et/ou pour le deuxième dispositif de traitement de données (1) contient certains paramètres supplémentaires qui sont prévus pour la commande du contenu et/ou du format de la sortie des informations à interroger par l'appareil (2).

15. Produit formant programme informatique avec des moyens pour la mise en oeuvre d'un procédé selon l'une des revendications 1 à 7, lorsque le programme informatique est exécuté sur un dispositif de traitement de données, sur un circuit électronique ou sur un système d'automatisation.
